# EUROPEAN PATENT SPECIFICATION

(11) **EP 2 731 989 B1**
(45) Date of publication and mention of the grant of the patent: **17.06.2015**
(21) Application number: 12737762.0
(22) Date of filing: 11.07.2012
(51) Int. Cl.: C08L 23/10, C08K 5/00

(54) **HETEROPHASIC POLYPROPYLENE WITH LOW CLTE AND HIGH STIFFNESS**
HETEROPHASISCHES POLYPROPYLEN MIT NIEDRIGEM LÄNGENAUSDEHNUNGSKOEFFIZIENT UND HOHER STEIFHEIT
POLYPROPYLÈNE HÉTÉROPHASIQUE AVEC CLTE FAIBLE ET UNE RIGIDITÉ ÉLEVÉE

(30) Priority: 15.07.2011 EP 11174131
(43) Date of publication of application: 21.05.2014
(73) Proprietor: Borealis AG, 1220 Vienna (AT)
(72) Inventor: POTTER, Gregory, A-4020 Linz (AT); GRESTENBERGER, Georg, A-3352 St. Peter in der Au (AT)
(74) Representative: Maiwald Patentanwalts GmbH
(86) International application number: PCT/EP2012/063590
(87) International publication number: WO 2013/010877

(56) References cited:
- EP-A1- 2 154 194
- EP-A1- 2 182 030
- EP-A1- 2 338 656
- WO-A1-2010/006999
- WO-A1-2010/142540

## Description

The present invention relates to a new heterophasic propylene copolymer with low coefficient of linear thermal expansion (CLTE) and high stiffness as well as to its manufacture.

Polypropylene is the material of choice in many applications as it can be tailored to specific purposes needed. For instance heterophasic polypropylenes are widely used in the automobile industry (for instance in bumper applications) as they combine good stiffness with reasonable impact strength behavior. Heterophasic polypropylenes contain a polypropylene matrix in which an amorphous phase is dispersed. The amorphous phase contains a propylene copolymer rubber, like an ethylene propylene rubber (EPR) or an ethylene propylene diene monomer polymer (EPDM). Further the heterophasic polypropylene contains a crystalline polyethylene to some extent. In the automobile industry such heterophasic polypropylene grades contain an amount of up to about 30 wt.-% propylene copolymer rubber, which normally is produced directly in one or two gas phase reactors or added externally to the matrix via a compounding step.

In the field of automotive exterior applications the thermal expansion of a polymer is of great importance. The coefficient of linear thermal expansion (CLTE) determines the minimum gap width between two parts. Most of the time the parts are made from different materials. To avoid big gaps and high stresses in the parts the coefficient of linear thermal expansion (CLTE) should be as low as possible.

The conventional way of reducing the coefficient of linear thermal expansion (CLTE) in automotive compounds is to incorporate inorganic fillers (usually at high loadings, i.e. 10 to 30 wt.-%). The reduction of thermal expansion and shrinkage via filler-addition is based on two different mechanisms that most of the time act simultaneously:
- volume dilution with a material of lower shrinkage / CLTE
- mechanical constraint by a dispersed phase with low CLTE and high modulus. For this purpose fillers with high aspect ratios are normally used.

A disadvantage of this method is that the materials may suffer from poor toughness, bad appearance and difficulties in processing. Furthermore, the weight of these parts increases through the filler incorporation. To minimize the need for filler incorporation the polymer itself should feature a high dimensional stability.

Thus the object of the present invention is to provide a polyolefin composition of low coefficient of linear thermal expansion (CLTE), rather low density, without compromising the stiffness of said composition.

The finding of the present invention is to α-nucleate a heterophasic polypropylene with rather high amounts of vinylcycloalkane polymer and/or vinylalkane polymer, i.e. of more than 150 ppm. A further finding is that the intrinsic viscosity ratio of the xylene cold soluble (XCS) fraction and the xylene cold insoluble (XCI) fraction of the heterophasic polypropylene [(XCS)/(XCI)] is equal or below 1.6.

Accordingly the present invention is directed to a polyolefin composition (PO) comprising
(a) a heterophasic propylene copolymer (HECO) comprising
   (a1) a polypropylene (PP) being the matrix of the heterophasic propylene copolymer (HECO) and
   (a2) an elastomeric propylene copolymer (E), said heterophasic propylene copolymer (HECO) has an intrinsic viscosity ratio of the xylene cold soluble (XCS) fraction and xylene cold insoluble (XCI) fraction [(XCS)/(XCI)] equal or below 1.6 and
(b) more than 150 to equal or below 800 ppm of a nucleating agent (VP) selected from the group consisting of vinylcycloalkane polymers, vinylalkane polymers and mixtures thereof.

It has been surprisingly found out that such a polyolefin composition (PO) has superior properties compared to known compositions in this technical field. In particular the coefficient of linear thermal expansion (CLTE) values are very low without compromising the mechanical properties, like the stiffness (see examples).

In the following the invention will be described in more detail.

One essential component of the present polyolefin composition (PO) is the heterophasic propylene copolymer (HECO).

The expression "heterophasic" as used in the instant invention indicates that the elastomeric propylene copolymer (E) is (finely) dispersed in the polypropylene (PP). In other words the polypropylene (PP) constitutes a matrix in which the elastomeric propylene copolymer (E) forms inclusions in the matrix, i.e. in the polypropylene (PP). Thus the matrix contains (finely) dispersed inclusions being not part of the matrix and said inclusions contain the elastomeric propylene copolymer (E). The term "inclusion" according to this invention shall preferably indicate that the matrix and the inclusion form different phases within the heterophasic system, said inclusions are for instance visible by high resolution microscopy, like electron microscopy or scanning force microscopy.

Further it is preferred that the heterophasic propylene copolymer (HECO) comprises as polymer components only the polypropylene (PP) and the elastomeric propylene copolymer (E). In other words the heterophasic propylene copolymer (HECO) may contain further additives but no other polymer in an amount exceeding 5 wt-%, more preferably exceeding 3 wt.-%, like exceeding 1 wt.-%, based on the total heterophasic propylene copolymer (HECO), more preferably based on the polymers present in the propylene copolymer (HECO). One additional polymer which may be present in such low amounts is a polyethylene which is a reaction product obtained by the preparation of the heterophasic propylene copolymer (HECO). Accordingly it is in particular appreciated that a heterophasic propylene copolymer (HECO) as defined in the instant invention contains only a polypropylene (PP), an elastomeric propylene copolymer (E) and optionally a polyethylene in amounts as mentioned in this paragraph.

Preferably the heterophasic propylene copolymer (HECO) has a melt flow rate MFR₂ (230 °C) of at least 5 g/10min, more preferably in the range of 8 to 300 g/10min, yet more preferably in the range of 10 to 100 g/10 min, still more preferably in the range of 10 to 80 g/10min.

Preferably it is desired that the heterophasic propylene copolymer (HECO) is thermo mechanically stable. Accordingly it is appreciated that the heterophasic propylene copolymer (HECO) has a melting temperature (Tₘ) of at least 135 °C, more preferably in the range of 135 to 170 °C, still more preferably in the range of 145 to 169 °C.

Preferably the propylene content in the heterophasic propylene copolymer (HECO) is 80.0 to 94.0 wt.-%, more preferably 82.0 to 92.0 wt.-%, based on the total heterophasic propylene copolymer (HECO), more preferably based on the amount of the polymer components of the heterophasic propylene copolymer (HECO), yet more preferably based on the amount of the polypropylene (PP) and the elastomeric propylene copolymer (E) together. The remaining part constitutes the comonomers as defined for the polypropylene (PP) being a random propylene copolymer (R-PP) and the elastomeric propylene copolymer (E), respectively, preferably ethylene. Accordingly the comonomer content, preferably ethylene content is in the range of 6.0 to 20.0 wt.-%, more preferably in the range of 8.0 to 18.0 wt.-%.

As stated above the matrix of the heterophasic propylene copolymer (HECO) is the polypropylene (PP).

The polypropylene (PP) according to this invention shall have a melt flow rate MFR₂ (230 °C) of 20 to 300 g/10min, preferably in the range of 30 to 100 g/10min more preferably in the range of 35 to 80 g/10min.

A broad molecular weight distribution (MWD) improves the processability of the polypropylene. Accordingly it is appreciated that the molecular weight distribution (MWD) of the polypropylene (PP) is at least 2.8, more preferably at least 3.0, like at least 3.3. In a preferred embodiment the molecular weight distribution (MWD) is preferably between 2.8 to 10.0, still more preferably in the range of 3.0 to 8.0.

The polypropylene (PP) can be a random propylene copolymer (R-PP) or a propylene homopolymer (H-PP), the latter is preferred.

Accordingly it is appreciated that the polypropylene (PP) has a comonomer content equal or below 10.0 wt.-%, more preferably equal or below 7.0 wt.-%.

The expression propylene homopolymer used in the instant invention relates to a polypropylene that consists substantially, i.e. of more than 99.5 wt.-%, still more preferably of at least 99.7 wt.-%, like of at least 99.8 wt.-%, of propylene units. In a preferred embodiment only propylene units in the propylene homopolymer are detectable.

In case the polypropylene (PP) is a random propylene copolymer (R-PP) it comprises monomers copolymerizable with propylene, for example comonomers such as ethylene and/or C₄ to C₁₂ α-olefins, in particular ethylene and/or C₄ to C₁₀ α-olefins, e.g. 1-butene and/or 1-hexene. Preferably the random propylene copolymer (R-PP) comprises, especially consists of, monomers copolymerizable with propylene from the group consisting of ethylene, 1-butene and 1-hexene. More specifically the random propylene copolymer (R-PP) comprises - apart from propylene - units derivable from ethylene and/or 1-butene. In a preferred embodiment the random propylene copolymer (R-PP) comprises units derivable from ethylene and propylene only. The comonomer content in the random propylene copolymer (R-PP) is preferably in the range of more than 0.5 to 10.0 wt.-%, still more preferably in the range of more than 0.5 to 7.0 wt.-%.

The term "random copolymer" indicates that the comonomers within the propylene copolymer (PP) are randomly distributed. The randomness defines the amount of isolated comonomer units, i.e. those which have no neighbouring comonomer units, compared to the total amount of comonomers in the polymer chain.

Preferably the polypropylene (PP) is isotactic. Accordingly it is appreciated that the propylene homopolymer (H-PP) has a rather high pentad concentration, i.e. more than 90 %, more preferably more than 92 %, still more preferably more than 93 % and yet more preferably more than 95 %, like at least 97 %. On the other hand it is preferred that the random propylene copolymer (R-PP) a triad concentration of more than 90 %, more preferably more than 92 %, still more preferably more than 93 % and yet more preferably more than 95 %, like at least 97 %.

The polypropylene (PP) can have a xylene cold soluble content (XCS) in a broad range, i.e. up to 6.0 wt.-%. Accordingly the polypropylene (PP) may have a xylene cold soluble content (XCS) in the range of 0.3 to 6.0 wt.-%, like 0.5 to 5.5 wt.-%.

However in preferred embodiments the polypropylene (PP), in particular in case the polypropylene (PP) is a propylene homopolymer (H-PP), has a xylene cold soluble (XCS) content in the range of 0.5 to 4.5 wt.-%, more preferably in the range of 0.8 to 3.5 wt.-%, still more preferably of 1.0 to 2.5 wt.-%.

One further essential component of the heterophasic propylene copolymer (HECO) is its elastomeric propylene copolymer (E).

The elastomeric propylene copolymer (E) preferably comprises monomers copolymerizable with propylene, for example comonomers such as ethylene and/or C₄ to C₁₂ α-olefins, in particular ethylene and/or C₄ to C₁₀ α-olefins, e.g. 1-butene and/or 1-hexene. Preferably the elastomeric propylene copolymer (E) comprises, especially consists of, monomers copolymerizable with propylene from the group consisting of ethylene, 1-butene and 1-hexene. More specifically the elastomeric propylene copolymer (E) comprises - apart from propylene - units derivable from ethylene and/or 1-butene. Thus in an especially preferred embodiment the elastomeric propylene copolymer phase (E) comprises units derivable from ethylene and propylene only.

In case the polypropylene (PP) is a random propylene copolymer (R-PP) if is preferred that the comonomer(s) of the random propylene copolymer (R-PP) and the elastomeric propylene copolymer (E) are the same.

The properties of the elastomeric propylene copolymer phase (E) mainly influences the xylene cold soluble (XCS) content of the heterophasic propylene copolymer (HECO). Thus although also the matrix contributes to some extent to the amount of xylene cold solubles, according to the present invention the xylene cold soluble (XCS) fraction of heterophasic propylene copolymer (HECO) is regarded as the elastomeric propylene copolymer (E) of the heterophasic propylene copolymer (HECO).

Accordingly, the amount of the elastomeric propylene copolymer (E), i.e. of the xylene cold soluble (XCS) fraction, of the heterophasic propylene copolymer (HECO) preferably is in the range of 20 to 50 wt.-%, more preferably in the range of 25 to 40 wt.-%, still more preferably in the range of 25 to 38 wt.-%. These values are preferably based on the heterophasic propylene copolymer (HECO) and not on the polyolefin composition (PO).

One important requirement of the present invention is that the elastomeric propylene copolymer (E) has a rather low weight average molecular weight as this promotes the formation of small particles, i.e. small inclusions within the matrix of the heterophasic propylene copolymer (HECO). Low intrinsic viscosity (IV) values reflect a low weight average molecular weight. As can be taken from the examples the low weight average molecular weight contributes to the improvement of thermal expansion. Thus it is appreciated that the elastomeric propylene copolymer phase (E), i.e. the xylene cold soluble fraction (XCS) of the heterophasic propylene copolymer (HECO), has an intrinsic viscosity (In) of equal or below 2.4 dl/g, more preferably in the range of 0.7 to equal or less than 2.4 dl/g, more preferably in the range of 1.0 to equal or less than 2.0 dl/g, still more preferably in the range of 1.5 to equal or less than 2.0 dl/g.

As mentioned above, the xylene soluble fraction (XCS) is mainly influenced by the elastomeric propylene copolymer (E). On the other hand the xylene cold insoluble (XCI) is mainly influenced by the matrix of the heterophasic propylene copolymer (HECO), i.e. by the polypropylene (PP). A particular finding of the invention is that especially good results are achieved in case the matrix, i.e. the polypropylene (PP) and the elastomeric propylene copolymer (E) have a similar molecular weight. Accordingly it is appreciated that the ratio of the intrinsic viscosity of the xylene cold soluble (XCS) fraction and of the xylene cold insoluble (XCI) fraction [(XCS)/(XCI)] is rather low. Thus one requirement of the present invention is that the heterophasic propylene copolymer (HECO) has an intrinsic viscosity ratio of the xylene cold soluble (XCS) fraction and the xylene cold insoluble (XCI) fraction [(XCS)/(XCI)] equal or below 1.6, more preferably in the range of 1.0 to 1.6, still more preferably in the range of 1.1 to 1.5, yet more preferably in the range of 1.1 to 1.4.

The comonomer content, preferably the ethylene content, within the elastomeric propylene copolymer phase (E) shall be preferably also in a specific range. Accordingly in a preferred embodiment the comonomer content, more preferably ethylene content, of the elastomeric propylene copolymer (E), i.e. of the xylene cold soluble fraction (XCS) of the heterophasic propylene copolymer (HECO), is less than 50 wt.-%, more preferably in the range of 15 to less than 50 wt.-%, still more preferably in the range of 25 to less than 50 wt.-%, yet more preferably in the range of 30 to 40 wt.-%. Accordingly it is appreciated that the propylene content of the elastomeric propylene copolymer (E), i.e. of the xylene cold soluble fraction (XCS) of the heterophasic propylene copolymer (HECO), is equal or more 50 wt.-%, more preferably in the range of equal or more than 50 to 85 wt.-%, still more preferably in the range of equal or more than 50 to 75 wt.-%, yet more preferably in the range of 60 to equal or less than 70 wt.-%.

A further essential aspect of the present invention is the presence of a rather high amount of the nucleating agent (VP) selected from the group consisting of vinylcycloalkane polymers, vinylalkane polymers and mixtures thereof. It has been surprisingly found out that with high loadings of the nucleating agent (VP) within the polyolefin composition (PO) the coefficient of linear thermal expansion (CLTE) can be significantly lowered. On the other hand the amount of the nucleating agent (VP) should not be too high otherwise the catalyst activity (kg polymer per g catalyst) becomes so low that the process is no longer economically efficient. Accordingly it is required that the polyolefin composition (PO) comprises equal or more than 150 to equal or below 800 ppm, more preferably in the range of 170 to 800 ppm, yet more preferably in the range of 180 to 500 ppm, like in the range of 190 to 400 ppm, of the nucleating agent (VP). The amount given in this paragraph preferably refers to the total amount of the nucleating agent (VP) present in the polyolefin composition (PO), preferably in the polyolefin composition (PO) without filler (F). In a specific embodiment the amount given in this paragraph is based on the total amount of the heterophasic propylene copolymer (HECO) and the nucleating agent (VP).

The polyolefin composition (PO) preferably comprises only the the nucleating agent (VP) but no other α-nucleating agents. Accordingly the polyolefin composition (PO) of the instant invention preferably is essentially, more preferably is free, of phosphorous-based α-nucleating agents, benzene amid derivatives, sorbitol derivatives and nonitol derivatives.

In this regard it is mentioned that the inorganic filler (F) which might be present in the instant polyolefin composition (PO) is not be regarded as an α-nucleating agent.

Preferably the vinylcycloalkane polymer comprises, more preferably consists of, units derived from the monomers of the formula

CH₂=CH-CHR³R⁴

wherein R³ and R⁴ together form a 5- or 6-membered saturated, unsaturated or aromatic ring, preferably R³ and R⁴ together form a 5- or 6-membered saturated ring, yet more preferably R³ and R⁴ together form 6-membered saturated ring.

Accordingly the vinylcycloalkane polymer is preferably selected from the group consisting of vinylcyclopentane, vinylcyclohexane, vinylcyclooctane, 2-methylvinylcyclohexane, 3-methylvinylcyclohexane, 4-methylvinylcyclohexane, 3-ethylvinylcyclohexane, 4-ethylvinylcyclohexane, allylcyclopentane and allylcyclohexane. In one preferred embodiment the vinylcycloalkane polymer is polyvinylcyclohexane.

The vinylalkane polymer comprises, more preferably consists of, units derived from the monomers of the formula

CH₂=CH-CHR³R⁴

wherein R³ and R⁴ independently represent an alkyl group comprising 1 to 4 carbon atoms.

In one preferred embodiment the polyolefin composition (PO) comprises the vinylcycloalkane polymer, in particular those as defined above. More preferably the polyolefin composition (PO) comprises the vinylcycloalkane polymer, in particular those as defined above, and no vinylalkane polymer.

In one especially preferred embodiment the polyolefin composition (PO) comprises polyvinylcyclohexane (pVCH). In yet another preferred embodiment the polyolefin composition (PO) comprises as the nucleating agent (VP) polyvinylcyclohexane only.

The polyolefin composition (PO) of the present invention may comprise in addition to the heterophasic propylene copolymer and the nucleating agent (VP) optionally further components.

One component can be an inorganic filler (F). In one embodiment such filler can be present up to 30 wt:-%, like 20 to 30 wt.-%. In another embodiment the inorganic filler (F) is used in rather small amounts, i.e. of not more than 10 wt.-%.

Preferably the inorganic filler (F) is a phyllosilicate, mica or wollastonite. Even more preferred the inorganic filler (F) is selected from the group consisting of mica, wollastonite, kaolinite, smectite, montmorillonite and talc. The most preferred inorganic filler (F) is talc.

The mineral filler (F) preferably has a cutoff particle size d95 [mass percent] of equal or below 20 µm more preferably below 10.0 µm, like below 8.0 µm.

Typically the inorganic filler (F) has a surface area measured according to the commonly known BET method with N₂ gas as analysis adsorptive of less than 22 m²/g, more preferably of less than 20 m²/g, yet more preferably of less than 18 m²/g. Inorganic fillers (F) fulfilling these requirements are preferably anisotropic mineral fillers (F), like talc, mica and wollastonite.

Further on the polyolefin composition (PO) may optionally comprise polyethylene (PE). Typical candidates are high density polyethylene (HDPE), low density polyethylene (LDPE) and linear low density polyethylene (LLDPE).

The high density polyethylene (HDPE) preferably has a density of at least 945 kg/m³, more preferably of at least 955 kg/m³, yet more preferably in the range of 945 to 975 kg/m³, still yet more preferably in the range of 955 to 968 kg/m³.

The low density polyethylene (LDPE) has preferably a density in the range of 900 to below 940 kg/m³, i.e. 910 to below 940 kg/m³, whereas the linear low density polyethylene (LLDPE) has preferably a density in the range of 850 to below 925 kg/m³.

Finally the instant polyolefin composition (PO) may comprise typical additives, like acid scavengers (AS), antioxidants (AO), hindered amine light stabilizers (HALS), slip agents (SA), and pigments. Preferably the amount of additives excluding the vinylcycloalkane polymer and/or vinylalkane polymer and the inorganic filler (F) shall not exceed 7 wt.-%, more preferably shall not exceed 5 wt.-%, like not more than 3.5 wt.-%, within the instant composition.

Accordingly the polyolefin composition (PO) preferably comprises
(a) at least 60 wt.-%, more preferably 70 to 99 wt.-%, yet more preferably 70 to 95 wt.-%, of the heterophasic propylene copolymer (HECO),
(b) more than 150 to equal or below 800 ppm, more preferably in the range of 170 to 800 ppm, yet more preferably in the range of 180 to 500 ppm, like in the range of 190 to 400 ppm, of nucleating agent (VP)
(c) 0 to 30 wt.-%, more preferably 0.1 to 9 wt.-%, of the inorganic filler (F), and
(d) 0 to 25 wt.-%, more preferably 0 to 20 wt.-%, of a polyethylene (PE),
based on the total polyolefin composition (PO).

The remaining part to 100 wt.-% constitute additives as mentioned above.

In one embodiment the polyolefin composition (PO) comprises as polymer components the heterophasic propylene copolymer (HECO) only. In such a case the polyolefin composition (PO) preferably comprises
(a) 80 to 99 wt.-%, more preferably 85 to 98 wt.-% of the heterophasic propylene copolymer (HECO),
(b) more than 150 to equal or below 800 ppm, more preferably in the range of 170 to 800 ppm, yet more preferably in the range of 180 to 500 ppm, like in the range of 190 to 400 ppm, of the nucleating agent (VP) and
(c) 0 to 30 wt.-%, more preferably 0.1 to 9 wt.-%, of the inorganic filler (F),
based on the total polyolefin composition (PO).

Again, the remaining part to 100 wt.-% constitute additives as mentioned above.

As mentioned above the polyolefin composition (PO) shall be used in particular in the field of automotive. In this area there is a trend to larger articles. The problem of such articles is that high pressures are needed during manufacture. To reduce pressure, the melt flow of the used material should be rather high. Accordingly the polyolefin composition (PO) of the instant invention preferably has a melt flow rate MFR₂ (230 °C) of more than 10 to 200 g/10min, preferably of 15 to 150 g/10min, more preferably of 15 to 80 g/10min.

Concerning the type of comonomers present in the polyolefin composition (PO), and concerning the total comonomer content, the xylene cold soluble (XCS) content, the comonomer content of xylene cold soluble (XCS) fraction, the intrinsic viscosity of the xylene cold soluble (XCS) fraction, the intrinsic viscosity ratio of the xylene cold soluble (XCS) fraction and the xylene cold insoluble (XCI) fraction, of the polyolefin composition (PO) it is referred to the information provided for the heterophasic propylene copolymer (HECO). Accordingly in one preferred embodiment, in particular in case the heterophasic propylene copolymer (HECO) is the only polymer component within the polyolefin composition (PO), the ranges provided for total comonomer content, xylene cold soluble (XCS) content, the comonomer content of xylene cold soluble (XCS) fraction, the intrinsic viscosity of the xylene cold soluble (XCS) fraction, the intrinsic viscosity ratio of the xylene cold soluble (XCS) fraction and the xylene cold insoluble (XCI) fraction, of the heterophasic propylene copolymer (HECO) are equally applicable for the polyolefin composition (PO).

Further also the polyolefin composition (PO) of the present invention can be regarded as a heterophasic system. Accordingly the polypropylene (PP) of the heterophasic propylene copolymer (HECO) constitutes also the matrix of the overall polyolefin composition (PO). The elastomeric propylene copolymer (E) and the optional polyethylene (PE) are (finely) dispersed in said matrix. Thereby the elastomeric propylene copolymer (E) and the polyethylene (PE) may form separate inclusions in the matrix, i.e. in the polypropylene (PP) or the polyethylene (PE) may form an inclusion within the inclusion of the elastomeric propylene copolymer (E). Also the inorganic filler (F) - if present - is finely dispersed in the system.

As mentioned above the polyolefin composition of the instant invention is featured by good mechanical properties. Accordingly it is preferred that the polyolefin composition (PO) has flexural modulus of at least 1,000 MPa, more preferably of at least 1050 MPa, yet more preferably in the range of 1,000 to 1,600 MPa, still more preferably in the range of 1,050 to 1350 MPa. These values apply in particular in case the filler (F) content is of not more than 10 wt.-%, i.e. in case no filler (F) is present.

Concerning the thermal expansion it is preferred that the polyolefin composition (PO) has a coefficient of linear thermal expansion (CLTE) performed in a temperature range from -30 to +80°C of not more than 103 µm/mK, more preferably of not more 100 µm/mK, still more preferably of below 98 µm/mK, still yet more preferably in the range of 70 to 100 µm/mK, like in the range of 78 to below 98 µm/mK. These values apply in particular for the polyolefin composition (PO) without filler (F). In a specific embodiment the values apply for the polyolefin composition (PO) containing the heterophasic propylene copolymer (HECO) as the only polymer component and said polyolefin composition (PO) is without filler (F)

Accordingly the present invention is not only directed to the polyolefin composition (PO) but also to the use of equal or more than 150 to equal or below 800 ppm of the nucleating agent (VP) in a heterophasic propylene copolymer to reduce the coefficient of linear thermal expansion (CLTE) performed in a temperature range from -30 to +80°C of said heterophasic propylene copolymer, said reduction is at least 6 µm/mK, more preferably in the range of 6 to 12 µm/mK, compared to the same heterophasic propylene copolymer but without the nucleating agent (VP). Concerning the more preferred amounts of the nucleating agent (VP) it is referred to the information provided above. Further the heterophasic propylene copolymer shall preferably be the heterophasic propylene copolymer (HECO) as defined above. It is especially preferred that the heterophasic propylene copolymer is the heterophasic propylene copolymer (HECO) with the intrinsic viscosity ratio as defined above.

The polyolefin composition (PO) of the present invention is preferably used for the production of automotive articles, like moulded automotive articles, preferably automotive injection moulded articles. Even more preferred is the use for the production of car interiors and exteriors, like bumpers, side trims, step assists, body panels, spoilers, dashboards, interior trims.

The current invention also provides (automotive) articles, like injection molded articles, comprising at least 60 wt.-%, more preferably at least 80 wt.-%, yet more preferably at least 95 wt.-%, like consisting, of the inventive polyolefin composition (PO). Accordingly the present invention is especially directed to automotive articles, especially to car interiors and exteriors, like bumpers, side trims, step assists, body panels, spoilers, dashboards, interior trims, comprising at least 60 wt.-%, more preferably at least 80 wt.-%, yet more preferably at least 95 wt.-%, like consisting, of the inventive polyolefin composition (PO). The polyolefin composition (PO) of the instant invention is preferably prepared by a process comprising the step of
(a1) mixing at least the heterophasic propylene copolymer (HECO) with more than 150 to equal or below 800 ppm, more preferably with 170 to 800 ppm, yet more preferably with 180 to 500 ppm, like in the range with 190 to 400 ppm, of the nucleating agent (VP),
   or
(a2) producing the heterophasic propylene copolymer (HECO) with a modified catalyst system, the modification is obtained by polymerizing a vinyl compound in the presence of the catalyst system obtaining the modified catalyst system.

Preferred vinyl compounds used have the formula:

CH₂=CH-CHR³R⁴

wherein R³ and R⁴ together form a 5- or 6-membered saturated, unsaturated or aromatic ring or independently represent an alkyl group comprising 1 to 4 carbon atoms. Concerning especially preferred vinyl compounds reference is made to the section when discussing the preferred vinylcycloalkane polymers and vinylalkane polymers, respectively.

Preferably the vinylcycloalkane polymer and vinylalkane polymer is brought in the polyolefin composition (PO) due to step (a2), i.e. due to the preparation of the heterophasic polypropylene (HECO) by using a modified catalyst system as defined in detail below.

Accordingly in the following the preparation of the heterophasic polypropylene (HECO) is described in more detail.

The heterophasic polypropylene (HECO) as well their individual components (matrix and elastomeric copolymer) can be produced by blending different polymer types, i.e. of different molecular weight and/or comonomer content. However it is preferred that the heterophasic polypropylene (HECO) as well their individual components (matrix and elastomeric copolymer) are produced in a sequential step process, using reactors in serial configuration and operating at different reaction conditions. As a consequence, each fraction prepared in a specific reactor will have its own molecular weight distribution and/or comonomer content distribution.

The heterophasic propylene copolymer (HECO) according to this invention is preferably produced in a sequential polymerization process, i.e. in a multistage process, known in the art, wherein the polypropylene (PP) is produced at least in one slurry reactor, preferably in a slurry reactor and optionally in a subsequent gas phase reactor, and subsequently the elastomeric propylene copolymer (E) is produced at least in one, i.e. one or two, gas phase reactor(s).

Accordingly it is preferred that the heterophasic propylene copolymer (HECO) is produced in a sequential polymerization process comprising the steps of
(a) polymerizing propylene and optionally at least one ethylene and/or C₄ to C₁₂ α-olefin in a first reactor system obtaining the polypropylene (PP),
(b) transferring the polypropylene fraction into a second reactor system,
(c) polymerizing in the second reactor system and in the presence of said polypropylene (PP) propylene and at least one ethylene and/or C₄ to C₁₂ α-olefin obtaining thereby the elastomeric propylene copolymer (E), the polypropylene (PP) and the elastomeric propylene copolymer (E) form the heterophasic propylene copolymer (HECO).

The first reactor system comprises at least one reactor, i.e. one or two reactor(s). Preferably the first reactor system comprises at least a slurry reactor, i.e. a slurry reactor and optionally one gas phase reactor. The slurry reactor can be any continuous or simple stirred batch tank reactor or loop reactor operating in bulk or slurry. Bulk means a polymerization in a reaction medium that comprises of at least 60 % (w/w) monomer. According to the present invention the slurry reactor is preferably a (bulk) loop reactor. The second reactor - if present - is preferably a gas phase reactor.

The second reactor system comprises also at least one reactor, i.e. one or two reactor(s). Preferably the reactor(s) is/are gas phase reactor(s).

The term "sequential polymerization process" indicates that the heterophasic propylene copolymer (HECO) is produced in at least two, like three or four reactors connected in series. Accordingly the present process comprises at least a first reactor and a second reactor, like a first reactor, a second reactor, a third reactor and optionally a fourth reactor. The term "polymerization reactor" shall indicate that the main polymerization takes place. Thus in case the process consists of four polymerization reactors, this definition does not exclude the option that the overall process comprises for instance a pre-polymerization step in a pre-polymerization reactor. The term "consist of" is only a closing formulation in view of the main polymerization reactors.

As mentioned above, the second reactor, the third reactor and optionally the fourth reactor are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor is a slurry reactor, like a loop reactor, whereas the second reactor, the third reactor and optionally the fourth reactor are gas phase reactors (GPR). In the loop reactor and the first gas phase reactor (first reactor system) preferably the polypropylene (PP); i.e. the matrix, of the heterophasic system is produced, whereas in the second and optionally third gas phase reactor the elastomeric propylene copolymer (E) is obtained.

If needed prior to the slurry reactor a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol^{®} process of Basell.

Preferably, in the instant process for producing the heterophasic propylene copolymer (HECO) as defined above the conditions for the first reactor, i.e. the slurry reactor, like a loop reactor, may be as follows:
- the temperature is within the range of 50 °C to 110 °C, preferably between 60 °C and 100 °C, more preferably between 68 and 95 °C,
- the pressure is within the range of 20 bar to 80 bar, preferably between 40 bar to 70 bar,
- hydrogen can be added for controlling the molar mass in a manner known per se.

Subsequently, the reaction mixture of the first reactor is transferred to the second reactor, i.e. gas phase reactor, whereby the conditions are preferably as follows:
- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the third reactor and optionally the fourth reactor, preferably in the second gas phase reactor and optionally third gas phase reactor, are similar to the second reactor.

The residence time can vary in the three reactor zones.

In one embodiment of the process for producing at least part of the polypropylene (PP) the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerization may be effected in a known manner under supercritical conditions in the first reactor, i.e. in the slurry reactor, like in the loop reactor, and/or as a condensed mode in the gas phase reactors.

The polymerization is preferably accomplished by modified catalyst system as defined in detail below. The modified catalyst system may be based on a metallocene catalyst, more preferably on a Ziegler-Natta procatalyst.

Preferably the process comprises also a prepolymerization with the catalyst system, like a catalyst system as described in detail below, i.e. a catalyst system comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60 °C, preferably from 15 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

According to the invention the heterophasic propylene copolymer (HECO) is obtained by a multistage polymerization process, as described above, in the presence of a catalyst system comprising as component (i) a Ziegler-Natta procatalyst which contains a trans-esterification product of a lower alcohol and a phthalic ester.

The procatalyst used according to the invention is prepared by
a) reacting a spray crystallized or emulsion solidified adduct of MgCl₂ and a C₁-C₂ alcohol with TiCl₄
b) reacting the product of stage a) with a dialkylphthalate of formula (I) 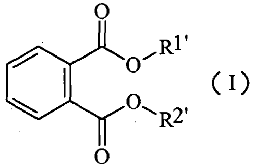 wherein R¹ and R² are independently at least a C₅ alkyl under conditions where a transesterification between said C₁ to C₂ alcohol and said dialkylphthalate of formula (I) takes place to form the internal donor
c) washing the product of stage b) or
d) optionally reacting the product of step c) with additional TiCl₄.

The procatalyst is produced as defined for example in the patent applications WO 87/07620, WO 92/19653, WO 92/19658 and EP 0 491 566.

First an adduct of MgCl₂ and a C₁-C₂ alcohol of the formula MgCl₂*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula MgCl₂*nROH, wherein R is methyl or ethyl, preferably ethyl and n is 1 to 6, is contacting with TiCl₄ to form a titanized carrier, followed by the steps of
- adding to said titanised carrier
   (i) a dialkylphthalate of formula (I) with R¹ and R² being independently at least a C₅-alkyl, like at least a C₈-alkyl,
      or preferably
   (ii) a dialkylphthalate of formula (I) with R^{1'} and R^{2'} being the same and being at least a C₅-alkyl, like at least a C₈-alkyl,
      or more preferably
   (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,
   to form a first product,
- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II) 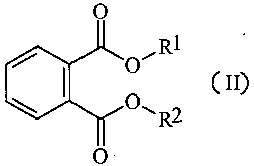 with R¹ and R² being methyl or ethyl, preferably ethyl,
   the dialkylphthalat of formula (II) being the internal donor and
- recovering said transesterification product as the procatalyst composition (component (i)).

The adduct of the formula MgCl₂*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BCF20P catalyst of Borealis (prepared according to WO 92/19653 as disclosed in WO 99/24479; especially with the use of dioctylphthalate as dialkylphthalate of formula (I) according to WO 92/19658) or the catalyst Polytrak 8502, commercially available from Grace.

For the production of the heterophasic propylene copolymer (HECO) according to the invention the catalyst system used preferably comprises in addition to the special Ziegler-Natta procatalyst an organometallic cocatalyst as component (ii).

Accordingly it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (IIIa) or (IIIb). Formula (IIIa) is defined by

Si(OCH₃)₂R₂⁵ (IIIa)

wherein R⁵ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that R⁵ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (IIIb) is defined by

Si(OCH₂CH₃)₃(NR^{x}R^{y}) (IIIb)

wherein R^{x} and R^{y} can be the same or different a represent a hydrocarbon group having 1 to 12 carbon atoms.

R^{x} and R^{y} are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that R^{x} and R^{y} are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both R^{x} and R^{y} are the same, yet more preferably both R^{x} and R^{y} are an ethyl group.

More preferably the external donor of formula (IIIb) is diethylaminotriethoxysilane.

Most preferably the external donor is of formula (IIIa), like dicyclopentyl dimethoxy silane [Si(OCH₃)₂(cyclo-pentyl)_{2]} or diisopropyl dimethoxy silane [Si(OCH₃)₂(CH(CH₃)₂)₂].

Essential aspect is that the Ziegler-Natta procatalyst is modified by polymerising a vinyl compound in the presence of the catalyst system, comprising the special Ziegler-Natta procatalyst (component (i)), an external donor (component (iii) and optionally a cocatalyst (component (iii)), which vinyl compound has the formula:

CH₂=CH-CHR³R⁴

wherein R³ and R⁴ together form a 5- or 6-membered saturated, unsaturated or aromatic ring or independently represent an alkyl group comprising 1 to 4 carbon atoms, and the modified catalyst is used for the preparation of the heterophasic propylene copolymer (HECO) according to this invention. Concerning the preferred vinyl compounds it is referred to the information provided above.

As mentioned above the polymerized vinyl compound acts as an α-nucleating agent.

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

Thus the modification of metallocene or Ziegler Natta catalyst system is preferably accomplished as follows:
(a) introducing a catalyst, like the procatalyst as defined above, the cocatalyst and optionally the external donor into a reaction medium comprising an inert fluid;
(b) feeding a vinyl compound to the agitated reaction medium at a weight ratio of 5 to 15 vinyl compound/catalyst (procatalyst)
(c) subjecting the vinyl compound to a polymerization reaction in the presence of said catalyst preferably at a temperature of 35 to 65 °C; and
(d) continuing the polymerization reaction until a maximum concentration of the unreacted vinyl compound of less than 2000 ppm, preferably less than 1000 ppm by weight is obtained.

Following the modification of the catalyst system with the vinyl compound, the catalyst system is fed to continuous prepolymerization (as mentioned above) following the main polymerization of the heterophasic propylene copolymer (HECO).

The present invention will now be described in further detail by the examples provided below.

### EXAMPLES

### 1. Definitions/Measuring Methods

The following definitions of terms and determination methods apply for the above general description of the invention as well as to the below examples unless otherwise defined.

### NMR-spectroscopy measurements:

The ¹³C-NMR spectra of polypropylenes were recorded on Bruker 400MHz spectrometer at 130 °C from samples dissolved in 1,2,4-trichlorobenzene/benzene-d6 (90/10 w/w). For the triad analysis the assignment is done according to the methods described in literature: (T. Hayashi, Y. Inoue, R. Chüjö, and T. Asakura, Polymer 29 138-43 (1988).and Chujo R, et al, Polymer 35 339 (1994).

The NMR-measurement was used for determining the mmmm pentad and mm triad concentration in a manner well known in the art.

**Melting temperature (Tₘ) and heat of fusion (H_{f}), crystallization temperature (T_{c}) and heat of crystallization (H_{c}):** measured with Mettler TA820 differential scanning calorimetry (DSC) on 5 to 10 mg samples. DSC is run according to ISO 3146 / part 3 /method C2 in a heat / cool / heat cycle with a scan rate of 10 °C/min in the temperature range of +23 to +210°C. Crystallization temperature and **heat of crystallization** (H_{c}) are determined from the cooling step, while melting temperature and **heat of fusion** (H_{f}) are determined from the second heating step

**Density** is measured according to ISO 1183-1 - method A (2004). Sample preparation is done by compression moulding in accordance with ISO 1872-2:2007.

**MFR₂ (230 °C)** is measured according to ISO 1133 (230 °C, 2.16 kg load).

**Number average molecular weight (Mₙ), weight average molecular weight (M_{w}) and molecular weight distribution (MWD)** are determined by Gel Permeation Chromatography (GPC) according to the following method:
The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 µL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

### Quantification of comonomer content by FTIR spectroscopy

The comonomer content is determined by quantitative Fourier transform infrared spectroscopy (FTIR) after basic assignment calibrated via quantitative ¹³C nuclear magnetic resonance (NMR) spectroscopy in a manner well known in the art. Thin films are pressed to a thickness of between 100-500 µm and spectra recorded in transmission mode. Specifically, the ethylene content of a polypropylene-co-ethylene copolymer is determined using the baseline corrected peak area of the quantitative bands found at 720-722 and 730-733 cm⁻¹. Quantitative results are obtained based upon reference to the film thickness.

**The xylene cold solubles (XCS, wt-%):** Content of xylene cold solubles (XCS) is determined at 25 °C according ISO 16152; first edition; 2005-07-01; the remaining part is the xylene insoluble part (XIS)

**Intrinsic viscosity** is measured according to DIN ISO 1628/1, October 1999 (in Decalin at 135 °C).

**Flexural Modulus:** The flexural modulus was determined in 3-point-bending according to ISO 178 on injection molded specimens of 80 x 10 x 4 mm prepared in accordance with ISO 294-1:1996.

**Coefficient of linear thermal expansion:** The coefficient of linear thermal expansion (CLTE) was determined in accordance with ISO 11359-2:1999 on 10 mm long pieces cut from the same injection molded specimens as used for the flexural modulus determination. The measurement was performed in a temperature range from +23 to +80°C and from -30 to +80°C, respectively, at a heating rate of 1 °C/min.

**Cutoff particle size d95 (Sedimentation)** is calculated from the particle size distribution [mass percent] as determined by gravitational liquid sedimentation according to ISO 13317-3 (Sedigraph)

**Specific surface area** is determined as the BET surface according to DIN 66131/2.

### 2. Examples

### Catalyst preparation:

All raw materials were essentially free from water and air and all material additions to the reactors and the different steps were done under inert conditions. 200 ml Ondina oil 68 was added to a 1 litre glass reactor and heated to 85 °C and kept there for two hours while purging with nitrogen. While keeping about 0.5 bar nitrogen pressure in the reactor the temperature was decreased to 15 °C and 7.3 ml triethyl aluminium (100%), 1.6 ml dicyclopentyldimethoxysilane and 15.1 g highly active and stereospecific Ziegler Natta catalyst (Borealis BCF20P) was added. For the comparative examples 3 and 4 (CE3 and CE4) 15.1g vinylcyclohexane (VCH) was added, for the comparative example 5 (CE5) 75.5 g VCH was added and for the comparative examples 6 and 7 (CE6 and CE7) and the inventive example (IE1) 151 g VCH was added. The temperature was increased to 85°C and kept there for 20 hours. 25ml heated (85 °C) and nitrogen purged White Protopet wax was added. Finally the reactor was cooled to about 30 °C and samples of the VCH modified catalyst were taken for polymeriation.

**Table 1: Specific polymerisation conditions of the examples**

| | | | **CE1** | **CE2** | **CE3** | **CE4** | **CE5** | **CE6** | **CE7** | **IE1** |
|---|---|---|---|---|---|---|---|---|---|---|
| | Catalyst / VCH ratio | | **no VCH** | **no VCH** | **1:1** | **1:1** | **1:5** | **1:10** | **1:10** | **1:10** |
| **Loop** | H₂ | [Mole %] | 2.9 | 2.9 | 2.9 | 2.9 | 2.9 | 2.9 | 2.9 | 2.9 |
| | Temperature | [K] | 358 | 358 | 358 | 358 | 358 | 358 | 358 | 358 |
| | Pressure | [bar] | 48.6 | 48.6 | 48.6 | 48.6 | 48.6 | 48.6 | 48.6 | 48.6 |
| | Split | [wt.-%] | 31 | 33 | 34 | 39 | 31 | 34 | 35 | 32 |
| | MFR₂ | [g/10min] | 43 | 43 | 43 | 43 | 46 | 38 | 38 | 38 |
| | | | | | | | | | | |
| **GPR1** | H₂ | [Mole %] | 8.5 | 8.5 | 8.5 | 8.5 | 8.5 | 8.5 | 8.5 | 8.5 |
| | Temperature | [K] | 358 | 358 | 358 | 358 | 358 | 358 | 358 | 358 |
| | Pressure | [bar] | 34 | 34 | 34 | 34 | 34 | 34 | 34 | 34 |
| | Split/wt% | [wt.-%] | 36 | 34 | 36 | 32 | 35 | 35 | 37 | 35 |
| | MFR₂ | [g/10min] | 43 | 43 | 43 | 43 | 43 | 40 | 40 | 40 |
| | | | | | | | | | | |
| **GPR2** | H2/C2 | [mol/mol] | 0.269 | 0.125 | 0.269 | 0.125 | 0.165 | 0.165 | 0.125 | 0.269 |
| | C2/(C2 + C3) | [mol/mol] | 0.394 | 0.394 | 0.394 | 0.394 | 0.394 | 0.394 | 0.394 | 0.394 |
| | Temperature/K | [K] | 358 | 358 | 358 | 358 | 358 | 358 | 358 | 358 |
| | Split | [wt.-%] | 33 | 33 | 30 | 29 | 33 | 32 | 28 | 33 |
| | Pressure | [bar] | 21 | 21 | 21 | 21 | 21 | 23 | 21 | 28 |
| | | | | | | | | | | |
| | Yield/ | [kg] | 2.63 | 2.87 | 2.64 | 3.03 | 2.14 | 2.18 | 2.06 | 2.13 |

The inventive and comparative examples were prepared in a Büchi 20 1 stainless steel autoclave reactor equipped with a helix stirrer and a continuous supply of propylene. An appropriate amount of catalyst prepared as described above was charged to a feeding vessel in glove box after which the feeding vessel is transferred to the reactor. After the catalyst hydrogen was added in the reactor. 5650 g liquid propylene were fed and a prepolymerisation was carried out at 23 °C for 6 min. Stirring was started and the temperature was increased to a set point temperature of 85 °C. The polymerization was conducted for 30 min whereas propylene and hydrogen were continuously fed to maintain the right polymer composition (2.9 mol% H₂). The total pressure in the reactor was 48.6 bar. As a second step the pressure was reduced to 34 bar. The temperature was kept at 85 °C and the propylene-hydrogene composition was changed accordingly (8.5 mol% H₂). The polymerization in this second step was conducted for 95 to 165 min (depending on the molecular weight of EPR fraction). As a third step the pressure was reduced to 21 bar (CE1. CE2. CE3. CE4. C5 CE6). respectively 23 bar (CE7) or 28 bar (IE1) and temperature was kept at 85 °C. Ethylene was fed together with propylene in order to achieve the mol proportion of 0.394 (mol C2 / mol (C2+C3)). The hydrogen feeding was adjusted according the targeted molecular weight of the copolymer from 0.125 to 0.419 (mol H₂/ mol C2). The polymerization in this third step was conducted for 117 - 207 min. Afterwards the reactor was vented. The polymer was first dried overnight in a fume-hood and then put into a vacuum oven for 2 hours at 60°C. The polymer powders were mixed with stabilizers (0.25 wt.-% Irganox B225 + 0.05 wt%CaSt) and extruded using a PRISM TSE 24 twin screw extruder with an L/D ratio of 30:1 and two sets of kneading blocks in the screw configuration using a melt temperature profile between 200 and 240 °C. The specific polymerisation conditions are shown in table 1.

**Table 2: Comparative Examples**

| Example | | CE 1 | CE 2 | CE 3 | CE 4 | CE 5 |
|---|---|---|---|---|---|---|
| pVCH | [ppm] | 0 | 0 | 9.3 | 8.2 | 103.8 |
| MFR₂ of Matrix | [g/10min] | 43 | 43 | 43 | 43 | 43 |
| XCS of Matrix | [wt%] | 1.2 | 1.2 | 1.1 | 1.2 | 1.2 |
| C2 of Matrix | [wt%] | 0 | 0 | 0 | 0 | 0 |
| MFR₂ total | [g/10min] | 19.4 | 14.4 | 20.6 | 14.7 | 14.5 |
| XCS total | [wt%] | 31 | 32 | 29 | 28 | 31 |
| IV of XCS total | [dl/g] | 1.9 | 2.6 | 1.9 | 2.5 | 2.3 |
| IV-ratio (XCS/XIS) | [-] | 1.3 | 1.8 | 1.3 | 1.7 | 1.6 |
| C2 in XCS total | [wt%] | 35 | 33 | 36 | 34 | 35 |
| C2 total | [wt%] | 13 | 12 | 12 | 11 | 13 |
| Tm | [°C] | 164.5 | 164.4 | 166.0 | 165.9 | 166.3 |
| Flexural Modulus | [MPa] | 944 | 914 | 1123 | 1112 | 1045 |
| CLTE -30/80 | [µm/mK] | 98.5 | 119.3 | 98.5 | 99.3 | 103.6 |

**Table 3: Comparative and Inventive Examples**

| **Example** | | **E 1** | **CE 6** | **CE 7** |
|---|---|---|---|---|
| pVCH | [ppm] | 203.0 | 198.7 | 209.8 |
| MFR₂ of Matrix | [g/10min] | 40 | 40 | 43 |
| XCS of Matrix | [wt%] | 1.2 | 1.3 | 1.3 |
| C2 of Matrix | [wt%] | 0 | 0 | 0 |
| MFR₂ total | [g/10min] | 16.3 | 12.9 | 11.8 |
| XCS total | [wt%] | 30 | 29 | 27 |
| IV of XCS total | [dl/g] | 1.9 | 2.4 | 2.8 |
| IV-ratio (XCS/XIS) | [-] | 1.3 | 1.7 | 2.0 |
| C2 in XCS total | [wt%] | 36 | 36 | 37 |
| C2 total | [wt%] | 14 | 13 | 13 |
| Tm | [°C] | 167.5 | 167.4 | 167.2 |
| Flexural Modulus | [MPa] | 1151 | 1165 | 1199 |
| CLTE -30/80 | [µm/mK] | 92.0 | 98.3 | 104.1 |

## Claims

1. Polyolefin composition (PO) comprising
(a) a heterophasic propylene copolymer (ECO) comprising
(a1) a polypropylene (PP) being the matrix of the heterophasic propylene copolymer (HECO) and
(a2) an elastomeric propylene copolymer (E) dispersed in the matrix of the heterophasic propylene copolymer (HECO),
said heterophasic propylene copolymer (HECO) has an intrinsic viscosity ratio of the xylene cold soluble (XCS) fraction and xylene cold insoluble (XCI) fraction [(XCS)/(XCI)] equal or below 1.6 the intrinsic viscosity is measured according to ISO 1628/1 and the XCS is measured according ISO 16152 and
(b) more than 150 to equal or below 800 ppm of a nucleating agent (VP) selected from the group consisting of vinylcycloalkane polymers, vinylalkane polymers and mixtures thereof.

2. Polyolefin composition (PO) according to claim 1, wherein the polypropylene (PP) has
(a) a melt flow rate MFR₂ (230 °C) of 20 to 300 g/10min,
and/or
(b) a melting temperature, determined by differential scanning calorimetry (DSC) according to ISO 3146, of at least 135 °C,
and/or
(c) a comonomer content of equal or below 10 wt.-%, the comonomers are ethylene and/or a C₄ to C₁₂ α-olefin.

3. Polyolefin composition (PO) according to one of the preceding claims, wherein polypropylene (PP) is a propylene homopolymer (H-PP).

4. Polyolefin composition (PO) according to one of the preceding claims, wherein the total polyolefin composition (PO) and/or the heterophasic propylene copolymer (HECO) has/have
(a) a melt flow rate MFR₂ (230 °C) of more than 8 to 300 g/10min,
and/or
(b) a comonomer content in the range of 6.0 to 20 wt.-%, the comonomers are ethylene and/or a C₄ to C₁₂ α-olefin.

5. Polyolefin composition (PO) according to one of the preceding claims, wherein
(a) the amount of the elastomeric propylene copolymer (E) within the heterophasic propylene copolymer (HECO) is 20 to 50 wt.-%,
and/or
(b) the elastomeric propylene copolymer (E) has a comonomer content of 15 to 50 wt.-%, the comonomers are ethylene and/or a C₄ to C₁₂ α-olefin.

6. Polyolefin composition (PO) according to one of the preceding claims, wherein the elastomeric propylene copolymer (E) has an intrinsic viscosity (IV) of equal or below 2.5 dl/g, measured as the intrinsic viscosity (IV) of the xylene cold soluble (XCS) fraction of the heterophasic propylene copolymer (HECO),

7. Polyolefin composition (PO) according to one of the preceding claims, wherein the polyolefin composition (PO) comprises up to 30 wt.-% of an inorganic filler.

8. Polyolefin composition (PO) according to one of the preceding claims, wherein the polyolefin composition (PO) without filler (F) has
(a) flexural modulus according to ISO 178 of at least 1050 MPa,
and/or
(c) a coefficient of linear thermal expansion (CLTE) performed in a temperature range from -30 to +80°C according to ISO 11359-2:1999 of not more than 100 µm/mK.

9. Automotive article comprising a polyolefin composition (PO) according to one of the preceding claims.

10. Automotive article according to claim 9, wherein the automotive article is an exterior automotive article.

11. Use of equal or more than 150 to equal or below 800 ppm of a nucleating agent (VP) in a heterophasic propylene copolymer (HECO) to reduce the coefficient of linear thermal expansion (CLTE) performed in a temperature range from -30 to +80°C of said heterophasic propylene copolymer (HECO), said reduction is at least 6 µm/mK compared to the same heterophasic propylene copolymer (HECO) but without nucleating agent (VP), said nucleating agent (VP) is selected from the group consisting of vinylcycloalkane polymers, vinylalkane polymers and mixtures thereof.

12. Process for the preparation of the polyolefin composition (PO) according to one of the preceding claims 1 to 8 comprising the step of
(a1) mixing at least the heterophasic propylene copolymer (HECO) with 150 to equal or below 800 ppm of vinylcycloalkane polymer and/or vinylalkane polymer obtaining thereby the polyolefin composition (PO)
or
(a2) producing the heterophasic propylene copolymer (HECO) with a modified catalyst system, the modification is obtained by polymerizing a vinyl compound in the presence of the catalyst system obtaining the modified catalyst system.

13. Process according to claim 12, wherein the vinyl compound has the formula:
CH₂=CH-CHR³R⁴
wherein R³ and R⁴ together form a 5- or 6-membered saturated, unsaturated or aromatic ring or independently represent an alkyl group comprising I to 4 carbon atoms.

14. Process according to claim 12, wherein the heterophasic propylene copolymer (HECO) is produced in a multistage process, comprising the steps of
(a) polymerizing in at least one reactor propylene and optionally ethylene and/or a C₄ to C₁₂ α-olefin in the presence of the modified catalyst system obtaining thereby the polypropylene (PP),
(b) transferring subsequently the polypropylene (PP) in a further reactor,
(c) polymerizing in at least said further reactor and in the presence of said polypropylene (PP) propylene and at least one ethylene and/or C₄ to C₁₂ α-olefin obtaining thereby the elastomeric propylene copolymer (E), the polypropylene (PP) and the elastomeric propylene copolymer (E) form the heterophasic propylene copolymer (HECO).

## Patentansprüche

1. Polyolefin-Zusammensetzung (PO), umfassend
(a) ein heterophasisches Propylen-Copolymer (HECO), umfassend
(a1) ein Polypropylen (PP), das die Matrix des heterophasischen Propylen-Copolymers (HECO)ist, und
(a2) ein elastomeres Propylen-Copolymer (E), dispergiert in der Matrix des heterophasischen Propylen-Copolymers (HECO),
wobei das heterophasische Propylen-Copolymer (HECO) ein Grenzviskositäts-Verhältnis der in kaltem Xylol löslichen Fraktion (XCS) und in kaltem Xylol unlöslichen Fraktion (XCI) [(XCS)/(XCI)] gleich oder unter 1,6 aufweist, wobei die Grenzviskosität gemäß ISO 1628/1 gemessen wird und die XCS gemäß ISO 16152 gemessen wird, und
(b) mehr als 150 bis gleich oder unter 800 ppm von einem Keimbildungsmittel (VP), ausgewählt aus der Gruppe, bestehend aus Vinylcycloalkan-Polymeren, Vinylalkan-Polymeren und Gemischen davon.

2. Polyolefin-Zusammensetzung (PO) nach Anspruch 1, wobei das Polypropylen (PP)aufweist
(a) eine Schmelze-Fließ-Rate MFR₂ (230°C) von 20 bis 300 g/10 min,
und/oder
(b) eine Schmelz-Temperatur, bestimmt durch dynamische Differenz-Kalorimetrie (DSC) gemäß ISO 3146, von mindestens 135°C,
und/oder
(c) einen Comonomer-Gehalt von gleich oder unter 10 Gew.-%, wobei die Comonomere Ethylen und/oder ein C₄ bis C₁₂ α-Olefin sind.

3. Polyolefin-Zusammensetzung (PO) nach einem der vorangehenden Ansprüche, wobei Polypropylen (PP) ein Propylen-Homopolymer (H-PP) ist.

4. Polyolefin-Zusammensetzung (PO) nach einem der vorangehenden Ansprüche, wobei die gesamte Polyolefin-Zusammensetzung (PO) und/oder das heterophasische Propylen-Copolymer (HECO) aufweist/aufweisen
(a) eine Schmelze-Fließ-Rate MFR₂ (230°C) von mehr als 8 bis 300 g/10 min, und/oder
(b) einen Comonomer-Gehalt in dem Bereich von 6,0 bis 20 Gew.-%, wobei die Comonomere Ethylen und/oder ein C₄ bis C₁₂ α-Olefin sind.

5. Polyolefin-Zusammensetzung (PO) nach einem der vorangehenden Ansprüche, wobei
(a) die Menge des elastomeren Propylen-Copolymers (E) in dem heterophasischen Propylen-Copolymer (HECO) 20 bis 50 Gew.-% ist,
und/oder
(b) das elastomere Propylen-Copolymer (E) einen Comonomer-Gehalt von 15 bis 50 Gew.-% aufweist, wobei die Comonomere Ethylen und/oder ein C₄ bis C₁₂ α-Olefin sind.

6. Polyolefin-Zusammensetzung (PO) nach einem der vorangehenden Ansprüche, wobei das elastomere Propylen-Copolymer (E) eine Grenzviskosität (IV) von gleich oder unter 2,5 dl/g, gemessen als die Grenzviskosität (IV) der in kaltem Xylol löslichen Fraktion (XCS) des heterophasischen Propylen-Copolymers (HECO), aufweist.

7. Polyolefin-Zusammensetzung (PO) nach einem der vorangehenden Ansprüche, wobei die Polyolefin-Zusammensetzung (PO) bis zu 30 Gew.-% von einem anorganischen Füllstoff umfasst.

8. Polyolefin-Zusammensetzung (PO) nach einem der vorangehenden Ansprüche, wobei die Polyolefin-Zusammensetzung (PO) ohne Füllstoff (F) aufweist
(a) Biege-Modul gemäß ISO 178 von mindestens 1050 MPa, und/oder
(c) einen linearen Wärme-Ausdehnungs-Koeffizienten (CLTE), ausgeführt in einem Temperatur-Bereich von -30 bis +80°C gemäß ISO 11359-2:1999 von nicht mehr als 100 µm/mK.

9. Kraftfahrzeug-Gegenstand, umfassend eine Polyolefin-Zusammensetzung (PO) nach einem der vorangehenden Ansprüche.

10. Kraftfahrzeug-Gegenstand nach Anspruch 9, wobei der Kraftfahrzeug-Gegenstand ein äußerer Kraftfahrzeug-Gegenstand ist.

11. Verwendung von gleich oder mehr als 150 bis gleich oder unter 800 ppm von einem Keimbildungsmittel (VP) in einem heterophasischen Propylen-Copolymer (HECO), um den linearen Wärme-Ausdehnungs-Koeffizienten (CLTE), ausgeführt in einem Temperatur-Bereich von -30 bis +80°C des heterophasischen Propylen-Copolymers (HECO), zu vermindern, wobei die Verminderung mindestens 6 µm/mK, verglichen mit dem gleichen heterophasischen Propylen-Copolymer (HECO) ist, jedoch ohne Keimbildungsmittel (VP), wobei das Keimbildungsmittel (VP) ausgewählt ist aus der Gruppe, bestehend aus Vinylcycloalkan-Polymeren, Vinylalkan-Polymeren und Gemischen davon.

12. Verfahren zur Herstellung der Polyolefin-Zusammensetzung (PO) nach einem der vorangehenden Ansprüche 1 bis 8, umfassend den Schritt von
(a1) Mischen mindestens des heterophasischen Propylen-Copolymers (HECO) mit 150 bis gleich oder unter 800 ppm Vinylcycloalkan-Polymer und/oder Vinylalkan-Polymer, wobei die Polyolefin-Zusammensetzung (PO) erhalten wird,
oder
(a2) Erzeugen des heterophasischen Propylen-Copolymers (HECO) mit einem modifizierten Katalysator-System, wobei die Modifizierung durch Polymerisieren einer Vinyl-Verbindung in Gegenwart des Katalysator-Systems unter Gewinnen des modifizierten Katalysator-Systems erhalten wird.

13. Verfahren nach Anspruch 12, wobei die Vinyl-Verbindung die Formel:
CH₂=CH-CHR³R⁴
aufweist, wobei R³ und R⁴ zusammen einen 5- oder 6-gliedrigen gesättigten, ungesättigten oder aromatischen Ring bilden oder unabhängig eine Alkyl-Gruppe, umfassend 1 bis 4 Kohlenstoff-Atome, wiedergeben.

14. Verfahren nach Anspruch 12, wobei das heterophasische Propylen-Copolymer (HECO) in einem Mehrstufen-Verfahren hergestellt wird, umfassend die Schritte von
(a) Polymerisieren in mindestens einem Reaktor von Propylen und gegebenenfalls Ethylen und/oder einem C₄ bis C₁₂ α-Olefin in Gegenwart des modifizierten Katalysator-Systems, wobei das Polypropylen (PP) erhalten wird,
(b) anschließend Überführen des Polypropylens (PP) in einen weiteren Reaktor,
(c) Polymerisieren in mindestens dem weiteren Reaktor und in Gegenwart des Polypropylens (PP) von Propylen und mindestens einem von Ethylen und/oder C₄ bis C₁₂ α-Olefin, wobei das elastomere Propylen-Copolymer (E) erhalten wird, wobei das Polypropylen (PP) und das elastomere Propylen-Copolymer (E) das heterophasische Propylen-Copolymer (HECO) bilden.

## Revendications

1. Composition de polyoléfine (PO) comprenant
(a) un copolymère de propylène hétérophasique (HECO) comprenant
(a1) un polypropylène (PP) constituant la matrice du copolymère de propylène hétérophasique (HECO) et
(a2) un copolymère de propylène élastomère (E) dispersé dans la matrice du copolymère de propylène hétérophasique (HECO),
ledit copolymère de propylène hétérophasique (HECO) présentant un rapport des viscosités intrinsèques de la fraction soluble dans le xylène froid (XCS) et de la fraction insoluble dans le xylène froid (XCI) [(XCS)/(XCI)] égal ou inférieur à 1,6, la viscosité intrinsèque étant mesurée conformément à la norme ISO 1628/1 et la XCS étant mesurée conformément à la norme ISO 16152, et
(b) plus de 150 à 800 ppm ou moins d'un agent de nucléation (VP) choisi dans l'ensemble constitué par les polymères de vinylcycloalcane, les polymère de vinylalcane et leurs mélanges.

2. Composition de polyoléfine (PO) selon la revendication 1, dans laquelle le polypropylène (PP) présente
(a) un indice de fluage MFR₂ (230°C) de 20 à 300 g/10 min et/ou
(b) un point de fusion, déterminé par calorimétrie à balayage différentiel (DCS) conformément à la norme ISO 3146, d'au moins 135°C,
et/ou
(c) une teneur en comonomères égale ou inférieure à 10 % en poids, les comonomères étant l'éthylène et/ou une α-oléfine en C₄ à C₁₂.

3. Composition de polyoléfine (PO) selon l'une des revendications précédentes, dans laquelle le polypropylène (PP) est un homopolymère de propylène (H-PP).

4. Composition de polyoléfine (PO) selon l'une des revendications précédentes, dans laquelle la composition de polyoléfine totale (PO) et/ou le copolymère de propylène hétérophasique (HECO) présente(nt)
(a) un indice de fluage MFR₂ (230°C) de plus de 8 à 300 g/10 min,
et/ou
(b) une teneur en comonomères située dans la plage allant de 6 à 20 % en poids, les comonomères étant l'éthylène et/ou une α-oléfine en C₄ à C₁₂.

5. Composition de polyoléfine (PO) selon l'une des revendications précédentes, dans laquelle
(a) la quantité du copolymère de propylène élastomère (E) à l'intérieur du copolymère de propylène hétérophasique (HECO) est de 20 à 50 % en poids,
et/ou
(b) le copolymère de propylène élastomère (E) présente une teneur en comonomères de 15 à 50 en poids, les comonomères étant l'éthylène et/ou une α-oléfine en C₄ à C₁₂.

6. Composition de polyoléfine (PO) selon l'une des revendications précédentes, dans laquelle le copolymère de propylène élastomère (E) présente une viscosité intrinsèque (IV) égale ou inférieure à 2,5 dl/g, mesurée en tant que viscosité intrinsèque (IV) de la fraction soluble dans le xylène froid (XCS) du copolymère de propylène hétérophasique (HECO).

7. Composition de polyoléfine (PO) selon l'une des revendications précédentes, laquelle composition de polyoléfine (PO) comprend jusqu'à 30 % en poids d'une charge inorganique.

8. Composition de polyoléfine (PO) selon l'une des revendications précédentes, laquelle composition de polyoléfine (PO) sans charge (F) présente
(a) un module en flexion, conformément à la norme ISO 178, d'au moins 1050 MPa,
et/ou
(b) un coefficient de dilatation thermique linéaire (CLTE), réalisée dans la plage de température allant de -30 à +80°C conformément à la norme ISO 11359-2:1999, ne dépassant pas 100 µm/mK.

9. Article d'automobile comprenant une composition de polyoléfine (PO) selon l'une des revendications précédentes.

10. Article d'automobile selon la revendication 9, lequel article d'automobile est un article d'extérieur d'automobile.

11. Utilisation de 150 ou plus à 800 ppm ou moins d'un agent de nucléation (VP) dans un copolymère de propylène hétérophasique (HECO) pour réduire le coefficient de dilatation thermique linéaire (CLTE), réalisée dans la plage de température allant de -30 à +80°C, dudit copolymère de propylène hétérophasique (HECO), ladite réduction étant d'au moins 6 µm/mK en comparaison avec le même copolymère de propylène hétérophasique (HECO) mais sans agent de nucléation (VP), ledit agent de nucléation (VP) étant choisi dans l'ensemble constitué par les polymères de vinylcycloalcane, les polymères de vinylalcane, et leurs mélanges.

12. Procédé pour la préparation de la composition de polyoléfine (PO) selon l'une des revendications 1 à 8, comprenant l'étape de
(a1) mélange d'au moins le copolymère de propylène hétérophasique (HECO) avec 150 à 800 ppm ou moins de polymère de vinylcycloalcane et/ou de polymère de vinylalcane, ce qui donne ainsi la composition de polyoléfine (PO),
ou
(a2) production du copolymère de propylène hétérophasique (HECO) avec un système catalyseur modifié, la modification étant obtenue par polymérisation d'un composé vinylique en présence du système catalyseur, ce qui donne le système catalyseur modifié.

13. Procédé selon la revendication 12, dans lequel le composé vinylique est de formule :
CH₂=CH-CHR³R⁴
dans laquelle R³ et R⁴ forment ensemble un cycle aromatique saturé ou insaturé à 5 ou 6 chaînons, ou représentent indépendamment un groupe alkyle possédant 1 à 4 atome(s) de carbone.

14. Procédé selon la revendication 12, dans lequel le copolymère de propylène hétérophasique (HECO) est produit par un procédé à étapes multiples, comprenant les étapes de
(a) polymérisation, dans au moins un réacteur, de propylène et éventuellement d'éthylène et/ou d'une α-oléfine en C₄ à C₁₂ en présence du système catalyseur modifié, ce qui donne ainsi le polypropylène (PP),
(b) transfert subséquent du polypropylène (PP) dans un autre réacteur,
(c) polymérisation, dans au moins ledit autre réacteur et en présence dudit polypropylène (PP), de propylène et d'au moins l'un parmi l'éthylène et/ou une α-oléfine en C₄ à C₁₂, ce qui donne ainsi le copolymère de propylène élastomère (E), le polypropylène (PP) et le copolymère de propylène élastomère (E) formant le copolymère de propylène hétérophasique (HECO).
